# EUROPÄISCHE PATENTSCHRIFT

(11) **EP 3 706 965 B1**
(45) Veröffentlichungstag und Bekanntmachung des Hinweises auf die Patenterteilung: **02.08.2023**
(21) Anmeldenummer: 19718101.9
(22) Anmeldetag: 09.04.2019
(51) Int. Cl.: B25J 15/00, B25J 15/02, B25J 13/08, B25J 9/16, B25J 11/00, H01R 43/20

(54) **GREIFVORRICHTUNG ZUM AUTOMATISIERTEN MONTIEREN UND EINSTECKEN VON EINEM MIT EINER ADER VERBUNDENEN KONTAKTELEMENT IN EINEN KONTAKTTRÄGER**
GRIPPING DEVICE FOR AUTOMATICALLY MOUNTING AND PLUGGING A CONTACT ELEMENT CONNECTED TO A WIRE INTO A CONTACT CARRIER
DISPOSITIF DE PRÉHENSION POUR LE MONTAGE ET L'ENFICHAGE AUTOMATISÉS D'UN ÉLÉMENT DE CONTACT RELIÉ À UN FIL DANS UN SUPPORT DE CONTACT

(30) Priorität: 27.04.2018 DE 102018110268
(43) Veröffentlichungstag der Anmeldung: 16.09.2020
(73) Patentinhaber: Kromberg & Schubert Automotive GmbH & Co. KG, 71272 Renningen (DE)
(72) Erfinder: BECHSTEIN, Daniel, 74336 Brackenheim (DE)
(74) Vertreter: Staeger & Sperling Partnerschaftsgesellschaft mbB
(86) Internationale Anmeldenummer: PCT/EP2019/058949
(87) Internationale Veröffentlichungsnummer: WO 2019/206621

(56) Entgegenhaltungen:
- EP-A1- 0 440 955
- US-A- 4 715 100
- US-A- 5 083 370
- US-B2- 7 650 689

## Beschreibung

Die Erfindung betrifft eine Greifvorrichtung zum automatisierten Montieren und Einstecken von zumindest zwei jeweils mit einer Ader verbundenen Kontaktelementen in jeweils eine Kontaktkammer eines Kontaktträgers.

Aus dem Stand der Technik sind bereits verschiedene Verfahren zum automatisierten Montieren oder Einstecken von Kontaktelementen in Kontaktkammern eines Kontaktträgers bekannt. In den Kontaktträger bzw. in die Kontaktkammern des Kontaktträgers müssen zumeist eine Vielzahl von Kontaktelementen eingesteckt werden, die dicht aneinander angeordnet sind. Durch die dichte Anordnung der Kontaktelemente und der mit ihnen verbundenen Adern in dem Kontaktträger bzw. durch die dichte Anordnung der Kontaktkammern in dem Kontaktträger, in welche jeweils ein Kontaktelement eingesteckt wird, ist es in der Praxis jedoch oft nicht möglich ein automatisiertes Montieren oder Einstecken zu realisieren. Sind die Kontaktkammern nah aneinander angeordnet, wie es bei einer großen Anzahl von einzusteckenden Kontaktelementen zwangsläufig der Fall ist, berührt ein Greifer, der unmittelbar das Kontaktelement greift, beim Einstecken eines Kontaktelements in eine Kontaktkammer umliegende Adern bzw. deren Kontaktelemente und verschiebt oder deformiert diese, sodass nicht ausgeschlossen werden kann, dass ein bereits eingestecktes Kontaktelement herausgezogen oder deformiert wird.

Hinzukommt, dass oft nicht nur einzelne Kontaktelemente, sondern mehrere mit jeweils einer Ader verbundene Kontaktelemente gleichzeitig montiert werden sollen, da die Adern zu einer Leitung gehören. Problematisch ist hierbei, dass die Adern bzw. die zugehörigen Kontaktelemente nicht einzeln gesteckt werden können, da es nicht oder nur sehr aufwändig möglich ist, ein zweites Kontaktelement einer zweiten Ader nach dem Einstecken eines ersten Kontaktelements einer ersten Ader sicher zu Greifen und Einzustecken. Die Kontaktelemente von Adern einer Leitung müssen daher zumeist gemeinsam Eingesteckt werden. Werden die Kontaktelemente dazu nicht unmittelbar gegriffen, sondern beispielsweise an der zugehörigen jedoch flexibten Adern, können sich die Orientierungen und Lagen der Kontaktelemente der Adern zueinander verändern, sodass die Kontaktelemente nicht mehr unmittelbar geführt sind und nicht mehr zwangsweise parallel zueinander oder parallel zu der Steckrichtung, entlang derer sie in die Kontaktkammern eingesteckt werden, liegen. Sind die Kontaktelemente nicht mehr zueinander bzw. zu der Steckrichtung ausgerichtet, sind sie dadurch nicht mehr in die zugehörigen Kontaktkammern einsteckbar, da diese sich parallel zu der Steckrichtung erstrecken.

Hinzukommt, dass die Kontaktelemente von den im Stand der Technik bekannten Greifern oft nicht in ihre Endmontageposition, in welcher die Kontaktelemente mit Gegenkontaktelementen in den Kontaktkammern kontaktiert sind, geschoben werden können, da die Greifer beim Bewegen der Kontaktelemente an dem Kontaktträger anstoßen würden.

Die im Stand der Technik bekannten Greifvorrichtungen und zugehörigen Verfahren sind daher ungeeignet mehrere Kontaktelemente und insbesondere mehrere Kontaktelemente von Adern einer Leitung in einen Kontaktträger einzustecken und mit den Gegenkontaktelementen zu kontaktieren.

Beispielsweise sind aus den Schriften US 7 650 689 B2, US 4 715 100 A und US 5 083 370 A Greifvorrichtungen zum Greifen und Montieren einer einzelnen Ader bekannt.

Der Erfindung liegt deshalb die Aufgabe zugrunde, vorbesagte Nachteile zu überwinden und eine Greifvorrichtung sowie ein zugehöriges Verfahren bereitzustellen, mit dem prozesssicher mehrere Kontaktelemente mit in Kontaktkammern angeordneten Gegenkontaktelementen montiert werden können.

Diese Aufgabe wird durch die Greifvorrichtung gemäß Patentanspruch 1 und gemäß dem Verfahren gemäß Patentanspruch 5 gelöst.

Erfindungsgemäß wird eine Greifvorrichtung zum automatisierten Montieren und Einstecken von zumindest einem ersten mit einer ersten Ader verbundenen und einem zweiten mit einer zweiten Ader verbundenen Kontaktelement in nebeneinander angeordnete Kontaktkammern durch jeweils eine Montageöffnung eines Kontaktträgers vorgeschlagen, wie sie durch Anspruch 1 beschrieben ist. Die Greifvorrichtung ist an einem beweglichen Roboterarm montiert, sodass sie von dem Roboterarm bewegt werden kann. An der Greifvorrichtung sind ein erster in eine Montage- bzw. Steckrichtung betrachtet vorderer und zweiter dazu versetzter hinterer Greifer (erster Greifer und zweiter Greifer) vorgesehen. Die Greifer weisen jeweils einen Greiferabschnitt zum Greifen der Adern auf. Der hintere Greifer weist wenigstens einen gegenüber dem vorderen Greifer in der Höhe bewegbaren oder dazu in Höhenrichtung versetzt angeordneten Greiferabschnitt auf. Durch den vorderen Greifer werden die Adern während des Einsteckens bzw. der Vormontage der Kontaktelemente durch die jeweiligen Montageöffnungen in die jeweiligen Kontaktkammern gehalten, während der hintere Greifer die Adern hält, sodass die Adern vorzugsweise zugspannungsfrei und zugentlastet sind, sodass sich die Adern während des Einsteckens nicht durch mechanische Spannungen verdrehen und die jeweiligen Kontaktelemente sich dadurch nicht verschieben. Dadurch bleibt während des Einsteckens die Ausrichtung der Kontaktelemente erhalten. Nachdem die Kontaktelemente in die Kontaktkammern eingesteckt sind, hält der hintere Greifer die Adern und schiebt die Kontaktelemente mittels der Adern weiter in die Kontaktkammern bis sich diese in einer Montageendposition befinden, in welcher sie bestimmungsgemäß mit dem jeweiligen Gegenkontakt kontaktiert sind. Durch den in Höhenrichtung bewegbaren oder einen zweiten zu einem ersten Greiferabschnitt versetzten Greiferabschnitt (oberer und unterer Greiferabschnitt) kann der vordere Greifer nach dem Einstecken der Kontaktelemente in die Kontaktkammern versetzt werden, sodass der vordere Greifer bei der auf das Einstecken folgende Endmontagebewegung, bei der die Kontaktelemente in die Endmontageposition geschoben werden, nicht mit dem Kontaktträger kollidiert.

Bei einer vorteilhaften Weiterbildung weist der zweite Greifer einen oberen und einen unteren Greiferabschnitt auf. Der obere Greiferabschnitt liegt in einer Ebene mit einem Greiferabschnitt des vorderen Greifers (vorderer Greifabschnitt) und mit der Steckrichtung, sodass der Greiferabschnitt des vorderen Greifers und der obere Greiferabschnitt des hinteren Greifers die Adern bei der Vormontage in einer gemeinsamen Montageebene halten. Nach der Vormontage und für die Endmontage greift die Greifvorrichtung um, sodass die Adern nur noch von dem unteren Greiferabschnitt des hinteren Greifers gehalten werden, welcher nicht in der vorgenannten Ebene liegt.

Eine alternative vorteilhafte Ausgestaltungsvariante der Greifvorrichtung sieht vor, dass der zweite Greifer in Höhenrichtung gegenüber dem ersten Greifer verfahrbar angeordnet ist. Während der Vormontage sind die Greiferabschnitte des vorderen und hinteren Greifers in einer Ebene mit der Steckrichtung angeordnet. Nach der Vormontage wird der vordere Greifer gelöst und der hintere oder alternativ der vordere Greifer verfahren, sodass der vordere Greifer nicht mehr in einer Ebene mit dem hinteren Greifer und der Steckrichtung angeordnet ist. Wird der hintere Greifer verfahren, wird vorzugsweise die gesamte Greifvorrichtung synchron dazu von dem Roboterarm bewegt, sodass der Greiferabschnitt des hinteren Greifers (hinterer Greiferabschnitt) gegenüber den Adern stationär bleibt.

Die Kontaktelemente können bei der Vormontage in Steckrichtung zueinander versetzt sein, sodass ein Kontaktelement gegenüber dem anderen Kontaktelement in Steckrichtung versetzt ist bzw. voreilt. Der Versatz kann durch eine Schwenkbewegung der Greifvorrichtung während der Steckbewegung bei der Vor- oder Endmontage ausgeglichen werden. Beispielsweise kann die Greifvorrichtung gegenüber der Steckbewegung schräg gestellt werden, sodass durch die Schrägstellung der Versatz ausgeglichen wird.

Eine vorteilhafte Ausbildungsvariante der Greifvorrichtung sieht vor, dass die Greifvorrichtung eine Adapterplatte, einen Kraftmomentensensor (oder eine Kraftmessvorrichtung) und eine Anbindungsvorrichtung aufweist. Die Anbindungsvorrichtung ist ausgebildet die Greifvorrichtung mit dem Roboterarm zu verbinden. An der Adapterplatte sind der erste und der zweite Greifer befestigt. Die Adapterplatte ist über den Kraftmomentensensor mit der Anbindungsvorrichtung verbunden, sodass die über den ersten und zweiten Greifer an der Adapterplatte angreifenden Kräfte und Momente mit dem Kraftmomentensensor mess- bzw. erfassbar sind. Der erste und der zweite Greifer sind jeweils ein servoelektrisch angetriebener Parallelgreifer. Ferner umfasst der erste Greifer zwei angetriebene Greiffinger mit jeweils einer Greifbacke, die zusammen einen vorderen Greiferabschnitt bilden, und der zweite Greifer zwei angetriebene Greiffinger mit jeweils zumindest einer Greifbacke. Sieht die Ausführungsform vor, dass der hintere Greifer ein oberen und unteren Greiferabschnitt umfasst, bilden die Greifbacken des hinteren Greifers gemeinsam den oberen und unteren Greiferabschnitt oder es sind alternativ an dem hinteren Greifer pro Greiffinger zwei Greifbacken vorgesehen, die gemeinsam den oberen und unteren Greiferabschnitt bilden. Bei einer Ausführungsvariante mit einem gegenüber dem vorderen Greifer bewegbaren hinteren Greifer, weist der hintere Greifer zwei Greiffinger mit je einer Greifbacke auf, die gemeinsam einen hinteren Greiferabschnitt bilden.

Erfindungsgemäß wird ferner ein Verfahren zum automatisierten Montieren und/oder Einstecken von zumindest einem ersten mit einer ersten Ader verbundenen und einem zweiten mit einer zweiten Ader verbundenen Kontaktelement in nebeneinander angeordnete Kontaktkammern vorgeschlagen, wie es durch Anspruch 5 beschrieben ist. Das Montieren und/oder Einstecken in die Kontaktkammern erfolgt durch Einführen der Kontaktelemente durch jeweils eine Montageöffnung einer Kontaktkammer eines Kontaktträgers mit einer erfindungsgemäßen Greifvorrichtung. Der erste Greifer greift die erste und die zweite Ader jeweils an einem ersten von dem jeweiligen Kontaktelement beabstandeten Greifabschnitt der ersten und zweiten Ader. Der zweite Greifer greift die erste und die zweite Ader jeweils an einem zweiten Greifabschnitt der ersten und zweiten Ader, der auf einer von den Kontaktelementen abgewandten Seite des ersten Greifabschnitts angeordnet ist. Das Greifen der Adern geschieht vorzugsweise in einer Aufnahmeposition und/oder Richtstation, in der die Position der Adern und die Position der Kontaktelemente zueinander festgelegt werden und bekannt sind. Sollen die Kontaktelemente zueinander versetzt sein, werden sie in der Richtstation zueinander versetzt angeordnet. Das erste Kontaktelement und das zweite Kontaktelement werden beispielsweise von der Richtstation aus, vor den Kontaktträger bewegt und die Kontaktelemente durch ein geeignetes Einsteckverfahren in die jeweilige Montageöffnung eingeführt. Sind die Kontaktelemente in die Kontaktkammern eingesteckt, werden sie in Steckrichtung, also parallel zu den Längsachsen der Kontaktkammern verschoben und in eine Vormontageposition gebracht, in der das erste Kontaktelement in einer ersten Kontaktkammer des Kontaktträgers und das zweite Kontaktelement in einer zweiten Kontaktkammer des Kontaktträgers eingeführt bzw. eingesteckt ist. Wenn das erste und zweite Kontaktelement in der Vormontageposition sind, wird der erste Greifer von der ersten und zweiten Ader gelöst. Anschließend werden das erste und zweite Kontaktelement durch eine Endmontagebewegung der Greifvorrichtung von der Vormontageposition in eine Endmontageposition bewegt. In der Endmontageposition sind das erste Kontaktelement mit einem ersten Gegenkontakt des Kontaktträgers in der ersten Kontaktkammer und das zweite Kontaktelement mit einem zweiten Gegenkontakt des Kontaktträgers in der zweiten Kontaktkammer kontaktiert. Die Gegenkontakte sind jeweils an einer von der Montageöffnung abgewandten Seite der jeweiligen Kontaktkammer angeordnet und erstrecken sich von dieser Seite in Richtung der jeweiligen Montageöffnung.

Eine weitere vorteilhafte Variante des Verfahrens sieht vor, dass das die erste und die zweite Ader zu einer Leitung gehören. Ferner wird die Leitung bestehend aus zumindest der ersten und der zweiten Ader vor dem Einstecken der jeweiligen Kontaktelemente in die jeweilige Kontaktkammer entlang einer Schablone, einem sogenannten Kabelformbrett, durch die Greifvorrichtung verlegt. Die Greifvorrichtung fährt dazu mit den gegriffenen Adern eine vorgegebene Wegstrecke ab, sodass die Leitung einen vorbestimmten Verlauf auf der Schablone einnimmt. Die Schablone kann hierfür Führungs- oder Lenkelemente vorsehen, durch welche die Leitung geführt oder umgelenkt wird.

Vorteilhaft ist ferner eine Verfahrensvariante, bei der das erste und zweite Kontaktelement durch die Greifvorrichtung nach dem Greifen der ersten und zweiten Ader an dem ersten und zweiten Greifabschnitt zu dem Kontaktträger bewegt werden. Anschließend werden das erste Kontaktelement durch die erste vor dem ersten Gegenkontakt liegende Montageöffnung des Kontaktträgers in die erste Kontaktkammer und gleichzeitig oder bei einem voreilenden ersten Kontaktelement anschließend das zweite Kontaktelement durch die zweite vor dem zweiten Gegenkontakt liegende Montageöffnung in die zweite Kontaktkammer des Kontaktträgers eingeführt bzw. eingesteckt, bis das erste und das zweite Kontaktelement sich in der Vormontageposition befinden.

Die Greifvorrichtung greift die erste und die zweite Ader bei einer vorteilhaften Verfahrensweiterbildung an einer Aufnahmeposition jeweils an dem ersten und zweiten Greifabschnitt, in welcher eine Lage des ersten und zweiten Greifabschnitts und der Kontaktelemente zueinander durch eine Aufnahmevorrichtung vorbestimmt sind.

Bei einer ebenfalls vorteilhaften Verfahrensvariante werden die erste und die zweite Ader in einem Abschnitt von dem zweiten Greifabschnitt zu den Kontaktelementen beim bringen in die Vor- und Endmontageposition gegenüber einem Abschnitt der Adern auf einer von den Kontaktelementen abgewandten Seite des zweiten Greifabschnitts durch den zweiten Greifer zugentlastet. Die Adern stehen dabei vorzugsweise durch den ersten und zweiten Greifer nicht unter mechanischer Spannung.

Die erste und die zweite Ader werden bei einer weiteren vorteilhaften Verfahrensweiterbildung beim Bringen der Kontaktelemente in die Vormontageposition an dem zweiten Greifabschnitt von dem vorderen und dem oberen Greiferabschnitt und bei der Endmontagebewegung von dem unteren Greiferabschnitt gegriffen. Der zweite Greifer greift vor der Endmontagebewegung von einer ersten, die Adern mit dem oberen Greiferabschnitt greifenden Stellung in eine zweite, die Adern mit dem unteren Greiferabschnitt greifenden Stellung um. Das Umgreifen setzt sich dabei aus Lösen des Griffes, Verfahren des Greifers und erneutem Greifen der Adern zusammen. Der untere Greiferabschnitt ist gegenüber dem oberen Greiferabschnitt zumindest um eine Breite oder Höhe des Kontaktträgers versetzt, sodass der vordere Greifer nach dem Umgreifen gegenüber dem Kontaktträger versetzt ist und sich in einen zu diesem benachbarten Bereich bewegen kann, wenn sich die Greifvorrichtung bei der Endmontagebewegung in Steckrichtung zu dem Kontaktträger hin bewegt.

Die Endmontagebewegung umfasst bei einer vorteilhaften Weiterbildung eine Bewegung der Greifvorrichtung zu dem Kontaktträger und eine Schwenkbewegung, um einen Versatz der Kontaktelemente von der Vormontageposition in die Endmontageposition auszugleichen, sodass das erste und zweite Kontaktelement in eine auf gleicher Höhe liegende Rastposition in den Kontaktkammern gebracht werden, welche der Endmontageposition entspricht.

Der Kraftmomentensensor ermittelt bei einer ebenfalls vorteilhaften Ausgestaltung des Verfahrens beim Bringen bzw. Bewegen des ersten und zweiten Kontaktelements in die Vormontageposition bzw. bei der Vormontagebewegung und/oder bei der Endmontagebewegung bzw. beim Bringen bzw. Bewegen aus der Vormontageposition in die Endmontageposition an der Greifvorrichtung einen Kraft- und Momentenverlauf und bestimmt anhand vorbestimmter Grenzwerte, ob bzw. wann das erste und zweite Kontaktelement sich in der Vormontageposition oder Endmontageposition befinden. Hierzu kann der Kraftmomentensensor mit einer Steuereinrichtung verbunden sein, wobei der Kraftmomentensensor die ermittelten Kraft- und Momentenwerte bzw. -verläufe an die Steuereinrichtung weitergibt, welche diese mit den vorbestimmten Grenzwerten und/oder Grenzkurven für maximale Kräfte und Momente vergleicht und daraus die gewünschten Informationen ermittelt.

Die Steuereinrichtung kann zudem mit dem Gelenkarmroboter verbunden sein und diesen Steuern. Zusätzlich zu den Kraft- und Momentenverläufen können zurückgelegte Strecken durch ein Wegmesssystem oder ein Positionserfassungssystem des Gelenkarmroboters bzw. Roboterarms von der Steuereinrichtung erfasst und verarbeitet werden, sodass beispielsweise durch eine mit einer bestimmten Kraft zurückgelegten Strecke bestimmbar ist, wie weit die Kontaktelemente in den Kontaktkammern eingesteckt sind.

Die erste und die zweite Ader können zudem in einem Abschnitt, der auf einer von den Kontaktelementen abgewandten Seite des ersten Greifabschnitts angeordnet ist, miteinander verdrillt sein. Die erste und die zweite Ader können zu einer gemeinsamen Leitung gehören oder eine gemeinsame Leitung bilden, welche zumindest abschnittsweise durch eine Isolation ummantelt sein kann.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

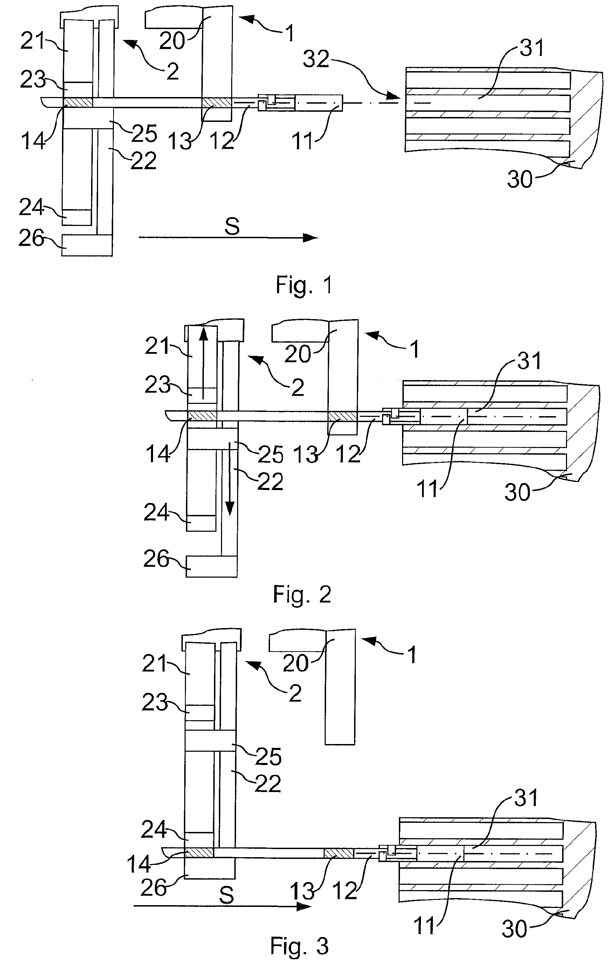

- Fig. 1 bis 3: jeweils eine Seitenansicht einer erfindungsgemäßen Greifvorrichtung bei einem Verfahren zum Montieren.

Die Figuren sind beispielhaft schematisch. Gleiche Bezugszeichen in den Figuren weisen auf gleiche funktionale und/oder strukturelle Merkmale hin.

Die Figuren 1 bis 3 stellen das Montieren bzw. Einstecken eines ersten und eines zweiten Kontaktelements 11 in einen Kontaktträger 30 aus einer seitlichen Ansicht mittels einer Greifvorrichtung dar. Aufgrund der seitlichen Ansicht verdecken das erste Kontaktelement 11 und die erste Ader 12 das zweite Kontaktelement und die zweite Ader. Der Kontaktträger 30 ist nur Ausschnittsweise und geschnitten dargestellt, sodass eine Vielzahl von Kontaktkammern des Kontaktträgers sichtbar ist, wobei die Kontaktkammern nebeneinander und übereinander angeordnet sind. Das erste und zweite Kontaktelement 11 werden durch das Verfahren jeweils in eine korrespondierende erste und zweite Kontaktkammer 31 eingesteckt. Aufgrund der seitlichen Ansicht wird auch die zweite Kontaktkammer von der ersten Kontaktkammer 31 überdeckt.

Die Greifvorrichtung weist einen ersten Greifer 1 mit zwei Greiffingern auf. An jedem der Greiffinger ist eine Greifbacke 20 ausgebildet. Die Greiffinger mit den Greifbacken 20 erstrecken sich in dem in den Figuren 1 bis 3 gezeigten Ausführungsbeispiel vertikal zu der ersten und zweiten Ader 12. Die Greifbacken 20 bestimmen gemeinsam einen vorderen Greiferabschnitt, mit welchem der erste Greifabschnitt 13 der ersten und zweiten Ader 12 gegriffen wird. Der erste Greifabschnitt 13 und auch der zweite Greifabschnitt 14 der Adern ist in den Figuren 1 bis 3 als schraffierter Bereich (nicht geschnitten) dargestellt.

Ein zweiter Greifer 2, der in Steckrichtung S weiter von dem Kontaktträger 30 beabstandet ist als der erste Greifer 1, weist einen ersten Greiffinger 21 und einen zweiten Greiffinger 22 auf, welche in Steckrichtung S zueinander versetzt sind. Die Greiffinger 21, 22 erstrecken sich vertikal zu der ersten und zweiten Ader 12 und bilden jeweils zwei Greifbacken 23, 24, 25, 26 aus. Die obere Greifbacke 23 des ersten Greiffingers 21 und die obere Greifbacke 25 des zweiten Greiffingers 22 bestimmen gemeinsam einen oberen Greiferabschnitt, mit welchem die Adern bei der Vormontage gegriffen werden, und die untere Greifbacke 24 des ersten Greiffingers 21 und die untere Greifbacke 26 des zweiten Greiffingers 22 bestimmen gemeinsam einen unteren Greiferabschnitt, mit welchem die Adern bei der Endmontage gegriffen werden.

Die Greifvorrichtung greift die erste und zweite Ader 12 in einer Aufnahmeposition aus einer Richtstation, in welcher die Position der ersten und zweiten Ader 12 mit den jeweils daran befestigten Kontaktelementen 11 festgelegt ist. Beim Greifen aus der Richtstation werden die Adern 12 von dem vorderen Greiferabschnitt an dem ersten Greifabschnitt 13 und von dem oberen Greiferabschnitt an dem zweiten Greifabschnitt 14 gegriffen. Anschließend bewegt die Greifvorrichtung die Adern mit den Kontaktelementen wie in Figur 1 gezeigt vor die Montageöffnungen der Kontaktkammern, wobei das einzuführende erste Kontaktelement 11 vor der ersten Montageöffnung 32 der ersten Kontaktkammer 31 des Kontaktträgers 30 angeordnet ist. Durch Bewegen der Adern bzw. des ersten Kontaktelements 11 in Steckrichtung S auf die Montageöffnung 32 zu und durch die Montageöffnung 32 in die Kontaktkammer 31, wird zumindest das erste Kontaktelement 11 in der ersten Kontaktkammer 31 in die Vormontageposition gebracht, wie es in Figur 2 gezeigt ist. Durch ein geeignetes Steckverfahren wird gleichzeitig zu dem Einstecken des ersten Kontaktelements 11 in die erste Kontaktkammer 31 oder danach das zweite Kontaktelement in die zweite Kontaktkammer eingesteckt. Durch das Greifen an dem ersten und zweiten Greifabschnitt der Adern mit der Greifvorrichtung wird der Abschnitt der Adern zwischen dem ersten und zweiten Greifabschnitt 13, 14 zugentlastet, sodass keine Kräfte auf die Adern wirken und die Kontaktelemente 11 nicht bei der Bewegung durch die Greifvorrichtung in ihrer Orientierung nicht geändert bzw. verdreht werden. Die in der Richtstation hergestellte Ausrichtung der Adern und der Kontaktelemente bleibt dadurch erhalten.

Wird die Greifvorrichtung ausgehend von der Darstellung in Figur 2 weiter auf den Kontaktträger zubewegt, können das erste und das zweite Kontaktelement nicht bis in ihre Endmontageposition geschoben werden, da der vordere bzw. erste Greifer 1 mit dem Kontaktträger 30 oder anderen bereits in den Kontaktträger 30 eingesteckten Kontaktelementen kollidieren würde. Erreicht das erste und das zweite Kontaktelement die Vormontageposition, sind diese in eine zu der Steckrichtung orthogonale Richtung durch die jeweilige Kontaktkammer fixiert. Anschließend werden der erste Greifer 1 und der zweite Greifer 2 von den jeweiligen Greifabschnitten der Ader gelöst. Der zweite Greifer 2 verfährt seinen ersten und zweiten Greiffinger 21, 22 in vertikaler Richtung wie durch die Pfeile in Figur 2 angedeutet. Nach dem Lösen des ersten und zweiten Greifers wird die Greifvorrichtung durch einen nicht dargestellten Gelenkarmroboter verfahren, sodass die Adern mit dem zweiten Greifabschnitt nicht mehr zwischen den ersten Greifbacken 23, 25 des ersten und zweiten Greiffingers 21, 22 des zweiten Greifers sondern zwischen den zweiten Greifbacken 24, 26 angeordnet ist. Die Greifvorrichtung bzw. der zweite Greifer 2 greift die Adern anschließend wieder, so wie in Figur 3 dargestellt.

Nach dem Greifen der Adern in dem zweiten Greifabschnitt 14 mit dem durch die zweiten Greifbacken 24, 26 gebildeten unteren Greiferabschnitt ist der erste Greifer 1 bzw. die Greiffinger des ersten Greifers zu dem Kontaktträger 30 versetzt nach oben angeordnet. Anschließend wird die Greifvorrichtung in Steckrichtung S bewegt, wodurch das erste und zweite Kontaktelement von der Vormontageposition in die Endmontageposition bewegt werden. Bei der Bewegung von der Vor- in die Endmontageposition werden die Adern nur von dem zweiten Greifer 2 bzw. dem unteren Greiferabschnitt des zweiten Greifers gegriffen. Der erste Greifer 1 bzw. die Greiffinger mit den Greifbacken 20 des ersten Greifers können sich dabei neben den bzw. oberhalb des Kontaktträgers 30 bewegen ohne mit diesem oder anderen Kontaktelementen zu kollidieren.

Die Erfindung beschränkt sich in ihrer Ausführung nicht auf die vorstehend angegebenen bevorzugten Ausführungsbeispiele. Vielmehr ist eine Anzahl von Varianten innerhalb des durch die Ansprüche definierten Bereiches denkbar, welche von der dargestellten Lösung auch bei grundsätzlich anders gearteten Ausführungen Gebrauch macht. Beispielsweise könnten die Greiffinger des vorderen Greifers in Steckrichtung klappbar ausgebildet sein, sodass sie bei einem Kontakt mit dem Kontaktträger gefedert zurückklappen.

## Patentansprüche

1. Greifvorrichtung montiert an einem beweglichen Roboterarm zum automatisierten Montieren und Einstecken von zumindest einem ersten mit einer ersten Ader (12) verbundenen Kontaktelement (11) und einem zweiten mit einer zweiten Ader verbundenen Kontaktelement in nebeneinander angeordnete Kontaktkammern durch jeweils eine Montageöffnung eines Kontaktträgers (30), wobei
ein erster in Steckrichtung (S) betrachtet vorderer Greifer (1) und zweiter dazu versetzter hinterer Greifer (2) an der Greifvorrichtung vorgesehen sind, die jeweils einen Greiferabschnitt zum gleichzeitigen Greifen der Adern aufweisen, wobei der hintere Greifer (2) wenigstens einen gegenüber dem vorderen Greifer (1) in der Höhe bewegbaren oder dazu in Höhenrichtung versetzt angeordneten Greiferabschnitt aufweist.

2. Greifvorrichtung nach Anspruch 1, wobei
der zweite Greifer (2) einen oberen und einen unteren Greiferabschnitt aufweist.

3. Greifvorrichtung nach Anspruch 1, wobei
der zweite Greifer (2) in Höhenrichtung gegenüber dem ersten Greifer (1) verfahrbar angeordnet ist.

4. Greifvorrichtung nach einem der vorhergehenden Ansprüche, wobei
die Greifvorrichtung eine Adapterplatte, einen Kraftmomentensensor und eine Anbindungsvorrichtung aufweist,
die Anbindungsvorrichtung ausgebildet ist, die Greifvorrichtung mit dem Roboterarm zu verbinden,
an der Adapterplatte der erste und der zweite Greifer (2) befestigt sind,
die Adapterplatte über den Kraftmomentensensor mit der Anbindungsvorrichtung verbunden ist, sodass die über den ersten und zweiten Greifer (2) an der Adapterplatte angreifenden Kräfte und Momente mit dem Kraftmomentensensor messbar sind,
der erste und zweite Greifer (2) jeweils ein servoelektrisch angetriebenen Parallelgreifer ist,
der erste Greifer (1) zwei angetriebene Greiffinger mit jeweils einer Greifbacke (20), die zusammen einen vorderen Greiferabschnitt bilden, und der zweite Greifer (2) zwei angetriebene Greiffinger (21, 22) mit jeweils zumindest einer Greifbacke (23, 24, 25, 26) umfasst.

5. Verfahren zum automatisierten Montieren oder Einstecken von zumindest einem ersten mit einer ersten Ader (12) verbundenen Kontaktelement (11) und einem zweiten mit einer zweiten Ader verbundenen Kontaktelement in nebeneinander angeordnete Kontaktkammern durch jeweils eine Montageöffnung eines Kontaktträgers (30) unter Verwendung einer Greifvorrichtung, welche an einem beweglichen Roboterarm zum automatisierten Montieren und Einstecken von zumindest einem ersten mit einer ersten Ader (12) verbundenen Kontaktelement (11) und einem zweiten mit einer zweiten Ader verbundenen Kontaktelement in nebeneinander angeordnete Kontaktkammern durch jeweils eine Montageöffnung eines Kontaktträgers (30) montiert ist,
wobei ein erster in Steckrichtung (S) betrachtet vorderer Greifer (1) und zweiter dazu versetzter hinterer Greifer (2) an der Greifvorrichtung vorgesehen sind, die jeweils einen Greiferabschnitt zum Greifen der Adern aufweisen,
wobei der hintere Greifer (2) wenigstens einen gegenüber dem vorderen Greifer (1) in der Höhe bewegbaren oder dazu in Höhenrichtung versetzt angeordneten Greiferabschnitt aufweist,
wobei der erste Greifer (1) die erste und die zweite Ader (12) jeweils an einem ersten von dem jeweiligen Kontaktelement (11) beabstandeten Greifabschnitt (13) der ersten und zweiten Ader (12) greift,
der zweite Greifer (2) die erste und die zweite Ader (12) jeweils an einem zweiten Greifabschnitt (14) der ersten und zweiten Ader (12) greift, der auf einer von den Kontaktelementen abgewandten Seite des ersten Greifabschnitts (13) angeordnet ist,
das erste Kontaktelement (11) und das zweite Kontaktelement in eine Vormontageposition gebracht werden, in der das erste Kontaktelement (11) in einer ersten Kontaktkammer (31) des Kontaktträgers (30) und das zweite Kontaktelement in einer zweiten Kontaktkammer des Kontaktträgers (30) eingeführt ist,
der erste Greifer (1) von der ersten und zweiten Ader (12) gelöst wird, wenn das erste und zweite Kontaktelement (11) in der Vormontageposition sind, und anschließend
das erste und zweite Kontaktelement (11) durch eine Endmontagebewegung der Greifvorrichtung von der Vormontageposition in eine Endmontageposition bewegt werden, in der das erste Kontaktelement (11) mit einem ersten Gegenkontakt des Kontaktträgers (30) in der ersten Kontaktkammer (31) und das zweite Kontaktelement mit einem zweiten Gegenkontakt des Kontaktträgers (30) in der zweiten Kontaktkammer kontaktiert sind.

6. Verfahren nach dem vorhergehenden Anspruch, wobei
das erste und zweite Kontaktelement (11) durch die Greifvorrichtung nach dem Greifen der ersten und zweiten Ader (11) an dem ersten und zweiten Greifabschnitt (13, 14) zu dem Kontaktträger (30) bewegt werden, das erste Kontaktelement (11) durch die erste vor dem ersten Gegenkontakt liegende Montageöffnung (32) des Kontaktträgers (30) in die erste Kontaktkammer (31) und gleichzeitig oder anschließend das zweite Kontaktelement durch die zweite vor dem zweiten Gegenkontakt liegende Montageöffnung in die zweite Kontaktkammer des Kontaktträgers (30) eingeführt werden, bis das erste und das zweite Kontaktelement (11) sich in der Vormontageposition befinden.

7. Verfahren nach einem der vorhergehenden Ansprüche 5 oder 6, wobei
die Greifvorrichtung die erste und die zweite Ader (12) an einer Aufnahmeposition jeweils an dem ersten und zweiten Greifabschnitt (13, 14) greift, in welcher eine Lage des ersten und zweiten Greifabschnitts (13, 14) und der Kontaktelemente zueinander durch eine Aufnahmevorrichtung vorbestimmt sind.

8. Verfahren nach einem der vorhergehenden Ansprüche 5 bis 7, wobei
die erste und zweite Ader (12) in einem Abschnitt von dem zweiten Greifabschnitt (14) zu den Kontaktelementen (11) beim bringen in die Vor- und Endmontageposition gegenüber einem Abschnitt der Adern (12) auf einer von den Kontaktelementen abgewandten Seite des zweiten Greifabschnitts (14) durch den zweiten Greifer (2) zugentlastet werden.

9. Verfahren nach einem der vorhergehenden Ansprüche 5 bis 8
wobei die Greifvorrichtung eine Adapterplatte, einen Kraftmomentensensor und eine Anbindungsvorrichtung aufweist,
die Anbindungsvorrichtung ausgebildet ist, die Greifvorrichtung mit dem Roboterarm zu verbinden,
an der Adapterplatte der erste und der zweite Greifer (2) befestigt sind,
die Adapterplatte über den Kraftmomentensensor mit der Anbindungsvorrichtung verbunden ist, sodass die über den ersten und zweiten Greifer (2) an der Adapterplatte angreifenden Kräfte und Momente mit dem Kraftmomentensensor messbar sind,
der erste und zweite Greifer (2) jeweils ein servoelektrisch angetriebenen Parallelgreifer ist,
der erste Greifer (1) zwei angetriebene Greiffinger mit jeweils einer Greifbacke (20), die zusammen einen vorderen Greiferabschnitt bilden, und der zweite Greifer (2) zwei angetriebene Greiffinger (21, 22) mit jeweils zumindest einer Greifbacke (23, 24, 25, 26) umfasst,
wobei die erste und die zweite Ader (12) beim Bringen der Kontaktelemente (11) in die Vormontageposition an dem zweiten Greifabschnitt (14) von dem vorderen und dem oberen Greiferabschnitt und bei der Endmontagebewegung von dem unteren Greiferabschnitt gegriffen werden, wobei der zweite Greifer (2) vor der Endmontagebewegung von einer ersten, die Adern (12) mit dem oberen Greiferabschnitt greifenden Stellung in eine zweite, die Adern mit dem unteren Greiferabschnitt greifenden Stellung umgreift.

10. Verfahren nach einem der vorhergehenden Ansprüche 5 bis 9, wobei
die Endmontagebewegung eine Bewegung der Greifvorrichtung zu dem Kontaktträger (30) und eine Schwenkbewegung umfasst, um einen Versatz der Kontaktelemente (11) von der Vormontageposition in die Endmontageposition auszugleichen, sodass das erste und zweite Kontaktelement (11) in eine auf gleicher Höhe liegende Rastposition in den Kontaktkammern (31) gebracht werden, welche der Endmontageposition entspricht.

11. Verfahren nach dem vorhergehenden Anspruch, wobei
der Kraftmomentensensor beim Bringen des ersten und zweiten Kontaktelements (11) in die Vormontageposition und/oder bei der Endmontagebewegung an der Greifvorrichtung einen Kraft- und Momentenverlauf ermittelt und anhand vorbestimmter Grenzwerte bestimmt wird, ob das erste und zweite Kontaktelement (11) sich in der Vormontageposition oder Endmontageposition befinden.

12. Verfahren nach einem der vorhergehenden Ansprüche, wobei
die erste und die zweite Ader (12) in einem Abschnitt, der auf einer von den Kontaktelementen (11) abgewandten Seite des ersten Greifabschnitts (13) angeordnet ist, miteinander verdrillt sind.

## Claims

1. A gripping device mounted on a movable robot arm for the automated mounting and insertion, through a respective mounting opening of a contact carrier (30), of at least one first contact element (11) that is connected to a first wire (12) and one second contact element that is connected to a second wire in adjacently arranged contact chambers, wherein
a first, front gripper (1) as viewed in the direction of insertion (S) and a second, rear gripper (2) that is offset relative thereto are provided on the gripping device, each having a gripper portion for simultaneously gripping the wires, the rear gripper (2) having at least one gripper portion whose height can be changed relative to the front gripper (1) or which can be offset relative thereto in the vertical direction.

2. The gripping device as set forth in claim 1, wherein
the second gripper (2) has an upper and a lower gripper portion.

3. The gripping device as set forth in claim 1, wherein
the second gripper (2) is arranged such that it can be moved in the vertical direction relative to the first gripper (1).

4. The gripping device as set forth in any one of the preceding claims, wherein
the gripping device has an adapter plate, a force/torque sensor, and a connection device,
the connection device is designed to connect the gripping device to the robot arm,
the first and the second grippers (2) are attached to the adapter plate, the adapter plate being connected to the connection device via the force/torque sensor such that the forces and moments acting on the adapter plate via the first and second grippers (2) can be measured using the force/torque sensor,
each of the first and second grippers (2) constitutes a servo-electrically driven parallel gripper, the first gripper (1) comprising two driven gripping fingers, each with a gripping jaw (20), which together form a front gripper portion, and the second gripper (2) comprising two driven gripping fingers (21, 22), each with at least one gripping jaw (23, 24, 25, 26).

5. A method for the automated assembly or insertion, through a respective assembly opening of a contact carrier (30), of at least one first contact element (11) that is connected to a first wire (12) and one second contact element that is connected to a second wire in adjacently arranged contact chambers using a gripping device that is mounted on a movable robot arm for the automated assembly and insertion, through a respective installation opening of a contact carrier (30), of at least one first contact element (11) that is connected to a first wire (12) and one second contact element that is connected to a second wire in adjacently arranged contact chambers,
wherein a first, front gripper (1) as viewed in the direction of insertion (S) and a second, rear gripper (2) that is offset relative thereto is provided on the gripping device, each having a gripper portion for gripping the wires,
wherein the rear gripper (2) has at least one gripper portion whose height can be changed relative to the front gripper (1) or is arranged so as to be offset relative thereto in the vertical direction,
wherein the first gripper (1) grips the first and the second wires (12), respectively, on a first gripping portion (13) of the first and second wires (12), which is spaced apart from the respective contact element (11),
the second gripper (2) grips the first and the second wires (12), respectively, on a second gripping portion (14) of the first and second wires (12), which is arranged on a side of the first gripping portion (13) that faces away from the contact elements,
the first contact element (11) and the second contact element are brought into a preassembly position in which the first contact element (11) is inserted into a first contact chamber (31) of the contact carrier (30) and the second contact element is inserted in a second contact chamber of the contact carrier (30),
the first gripper (1) is released from the first and second wires (12) when the first and second contact elements (11) are in the preassembly position, whereupon
the first and second contact element (11) are moved from the preassembly position to a final assembly position by means of a final assembly movement of the gripping device in which the first contact element (11) id contacted with a first mating contact of the contact carrier (30) in the first contact chamber (31) and the second contact element is contacted with a second mating contact of the contact carrier (30) in the second contact chamber.

6. The method as set forth in the preceding claim, wherein,
after the gripping of the first and second wires (11) on the first and second gripping portions (13, 14), the first and second contact elements (11) are moved by the gripping device to the contact carrier (30), the first contact element (11) is inserted through the first assembly opening (32) of the contact carrier (30) located in front of the first mating contact into the first contact chamber (31) and, at the same time or subsequently, the second contact element is inserted through the second assembly opening located in front of the second mating contact into the second contact chamber of the contact carrier (30), until the first and the second contact elements (11) are in the preassembly position.

7. The method as set forth in any one of preceding claims 5 or 6, wherein
the gripping device grips the first and the second wires (12) at a receiving position on the first and second gripping portions (13, 14), respectively, in which receiving position a position of the first and second gripping portions (13, 14) and of the contact elements relative to one another is predetermined by a receiving device.

8. The method as set forth in any one of preceding claims 5 to 7, wherein,
in a portion from the second gripping portion (14) to the contact elements (11), the first and second wires (12) are relieved of strain by the second gripper (2) when brought into the preassembly and final assembly position relative to a portion of the wires (12) on a side of the second gripping portion facing away from the contact elements (14).

9. The method as set forth in any one of preceding claims 5 to 8, wherein
the gripping device has an adapter plate, a force/torque sensor, and a connection device,
the connection device is designed to connect the gripping device to the robot arm,
the first and the second grippers (2) are attached to the adapter plate, the adapter plate being connected to the connection device via the force/torque sensor such that the forces and moments acting on the adapter plate via the first and second grippers (2) can be measured using the force/torque sensor,
each of the first and second grippers (2) constitutes a servo-electrically driven parallel gripper,
the first gripper (1) comprises two driven gripping fingers, each with a gripping jaw (20), which together form a front gripper portion, and the second gripper (2) comprises two driven gripping fingers (21, 22), each with at least one gripping jaw (23, 24, 25, 26),
the first and the second wire (12) being gripped on the second gripping portion (14) by the front and the upper gripper portion when the contact elements (11) are brought into the preassembly position and by the lower gripper portion during the final assembly movement, and the second gripper (2) engaging around prior to final assembly movement from a first position in which the cores (12) are gripped with the upper gripper portion to a second position in which the cores are gripped with the lower gripper portion.

10. The method as set forth in any one of preceding claims 5 to 9, wherein
the final assembly movement comprises a movement of the gripping device to the contact carrier (30) and a pivoting movement in order to compensate for a displacement of the contact elements (11) from the preassembly position to the final assembly position, so that first and second contact elements (11) are brought into the contact chambers (31) into a locking position at the same height that corresponds to the final assembly position.

11. The method as set forth in the preceding claim, wherein,
when the first and second contact elements (11) are brought into the preassembly position and/or during the final assembly movement, the force/torque sensor determines a force and torque curve on the gripping device and identifies on the basis of predetermined limit values whether the first and second contact elements (11) are in the preassembly position or final assembly position.

12. The method as set forth in any one of the preceding claims, wherein
the first and the second wire (12) are twisted together in a portion that is arranged on a side of the first gripping portion (13) facing away from the contact elements (11).

## Revendications

1. Dispositif de préhension monté sur un bras robotisé mobile pour le montage et l'enfichage automatisés d'au moins un premier élément de contact (11) relié à un premier fil (12) et un second élément de contact relié à un second fil dans des chambres de contact disposées l'une à côté de l'autre chacune via une ouverture de montage d'un support de contact (30), dans lequel
un premier préhenseur avant (1), vu dans le sens d'enfichage (S), et un second préhenseur arrière (2), décalé par rapport au premier, sont prévus sur le dispositif de préhension, qui présentent chacun une section de préhension pour la préhension simultanée des fils, dans lequel le préhenseur arrière (2) présente au moins une section de préhension mobile en hauteur par rapport au préhenseur avant (1) ou décalée par rapport à celui-ci dans le sens de la hauteur.

2. Dispositif de préhension selon la revendication 1, dans lequel
le second préhenseur (2) présente une section de préhension supérieure et une section de préhension inférieure.

3. Dispositif de préhension selon la revendication 1, dans lequel
le second préhenseur (2) est disposé dans le sens de la hauteur par rapport au premier préhenseur (1).

4. Dispositif de préhension selon l'une des revendications précédentes, dans lequel
le dispositif de préhension présente une plaque d'adaptation, un capteur de couple de force et un dispositif de raccordement,
le dispositif de raccordement est conçu pour relier le dispositif de préhension au bras robotisé,
le premier et le second préhenseur (2) sont fixés à la plaque d'adaptation, la plaque d'adaptation est reliée via le capteur de couple de force au dispositif de raccordement de sorte que les forces et les couples appliqués à la plaque d'adaptation via le premier et le second préhenseur (2) puissent être mesurés avec le capteur de couple de force,
le premier et le second préhenseur (2) sont chacun un préhenseur parallèle à entraînement servoélectrique,
le premier préhenseur (1) comprend deux doigts de préhension entraînés, chacun avec une mâchoire de préhension (20), qui forment ensemble une section de préhenseur avant, et le second préhenseur (2) comprend deux doigts de préhension entraînés (21, 22), chacun avec au moins une mâchoire de préhension (23, 24, 25, 26).

5. Procédé de montage ou d'enfichage automatisés d'au moins un élément de contact (11) relié à un premier fil (12) et d'un second élément de contact relié à un second fil dans des chambres de contact disposées l'une à côté de l'autre chacune via une ouverture de montage d'un support de contact (30) à l'aide d'un dispositif de préhension, qui est monté à un bras robotisé mobile pour le montage et l'enfichage automatisés d'au moins un élément de contact (11) relié à un premier fil (12) et un second élément de contact relié à un second fil dans des chambres de contact disposées l'une à côté de l'autre chacune via une ouverture de montage d'un support de contact (30),
dans lequel un premier préhenseur avant (1), vu dans le sens d'enfichage (S), et un second préhenseur arrière (2), décalé par rapport au premier, sont prévus sur le dispositif de préhension, qui présentent chacun une section de préhension pour la préhension simultanée des fils,
dans lequel le préhenseur arrière (2) présente au moins une section de préhension mobile en hauteur par rapport au préhenseur avant (1) ou décalée par rapport à celui-ci dans le sens de la hauteur,
dans lequel le premier préhenseur (1) saisit le premier et le second fil (12) respectivement à une première section de préhension (13) du premier et du second fil (12) espacée de l'élément de contact (11) respectif,
le second préhenseur (2) saisit le premier et le second fil (12) respectivement sur une seconde section de préhension (14) du premier et du second fil (12), qui est disposée sur un côté de la première section de préhension (13) à l'écart des éléments de contact,
le premier élément de contact (11) et le second élément de contact sont placés en position de pré-montage dans laquelle le premier élément de contact (11) est inséré dans une première chambre de contact (31) du support de contact (30) et le second élément de contact dans une seconde chambre de contact du support de contact (30),
le premier préhenseur (1) est détaché du premier et du second fil (12) lorsque le premier et le second élément de contact (11) sont en position de pré-montage, puis
le premier et le second élément de contact (11) sont déplacés de la position de pré-montage à la position de montage final par un mouvement de montage final du dispositif de préhension, dans lequel le premier élément de contact (11) est mis en contact avec un premier contre-contact du support de contact (30) dans la première chambre de contact (31) et le second élément de contact avec un second contre-contact du support de contact (30) dans la seconde chambre de contact.

6. Procédé selon la revendication précédente, dans lequel
le premier et le second élément de contact (11) sont déplacés par le dispositif de préhension après avoir saisi le premier et le second fil (11) sur la première et la seconde section de préhension (13, 14) sur le support de contact (30), le premier élément de contact (11) est inséré dans la première chambre de contact (31) via la première ouverture de montage (32) du support de contact (30) située avant le premier contre-contact et simultanément ou ultérieurement le second élément de contact est inséré via la seconde ouverture de montage située avant le second contre-contact dans la seconde chambre de contact du support de contact (30), jusqu'à ce que le premier et le second élément de contact (11) soient en position de pré-montage.

7. Procédé selon l'une des revendications précédentes 5 ou 6, dans lequel
le dispositif de préhension saisit le premier et le second fil (12) en position de réception, chacun au niveau de la première et de la seconde section de préhension (13, 14), dans laquelle une position de la première et de la seconde section de préhension (13, 14) et des éléments de contact entre eux est prédéterminée par un dispositif de réception.

8. Procédé selon l'une des revendications précédentes 5 à 7, dans lequel
le premier et le second fil (12) sont déchargés de traction par le second préhenseur (2) dans une section allant de la seconde section de préhension (14) aux éléments de contact (11) lorsqu'ils entrent dans la position de pré-montage et de montage final en face d'une section des fils (12) sur un côté de la seconde section de préhension à l'écart de la seconde section de préhension (14).

9. Procédé selon l'une des revendications précédentes 5 à 8
dans lequel le dispositif de préhension comprend une plaque d'adaptation, un capteur de couple de force et un dispositif de raccordement,
le dispositif de raccordement est conçu pour relier le dispositif de préhension au bras robotisé,
le premier et le second préhenseur (2) sont fixés à la plaque d'adaptation,
la plaque d'adaptation est connectée au dispositif de raccordement via le capteur de couple de force, de sorte que les forces et les couples appliqués à la plaque d'adaptation via le premier et le second préhenseur (2) puissent être mesurés avec le capteur de couple de force,
le premier et le second préhenseur (2) sont respectivement des préhenseurs parallèles à entraînement servoélectrique,
le premier préhenseur (1) comprend deux doigts de préhension actionnables, chacun avec une mâchoire de préhension (20), qui forment ensemble une section de préhenseur avant, et le second préhenseur (2) comprend deux doigts de préhension actionnables (21, 22), chacun avec au moins une mâchoire de préhension (23, 24, 25, 26),
dans lequel le premier et le second fil (12) sont saisis par les sections de préhension avant et supérieure lorsque les éléments de contact (11) sont mis dans la position de pré-montage sur la seconde section de préhension (14) et lors du mouvement de montage final par la section de préhension inférieure, dans lequel, avant le mouvement de montage final, le second préhenseur (2) passe d'une première position saisissant les fils (12) avec la section de préhension supérieure à une seconde position saisissant les fils avec la section de préhension inférieure.

10. Procédé selon l'une des revendications précédentes 5 à 9, dans lequel
le mouvement de montage final comprend un mouvement du dispositif de préhension vers le support de contact (30) et un mouvement de pivot afin de compenser un décalage des éléments de contact (11) de la position de pré-montage à la position de montage final, de sorte que le premier et le second élément de contact (11) soient amenés à une position d'encliquetage à la même hauteur dans les chambres de contact (31), qui correspond à la position de montage final.

11. Procédé selon la revendication précédente, dans lequel
lorsque les premier et second éléments de contact (11) sont mis en position de pré-montage et/ou pendant le mouvement de montage final sur le préhenseur, le capteur de couple de force détermine une évolution de force et de couple et détermine si le premier et le second élément de contact (11) sont en position de pré-montage ou en position de montage final en fonction des valeurs limites prédéfinies.

12. Procédé selon l'une des revendications précédentes, dans lequel
le premier et le second fil (12) sont torsadés ensemble dans une section disposée sur un côté de la première section de préhension (13) qui est à l'écart des éléments de contact (11).
